# EUROPEAN PATENT APPLICATION

(11) **EP 4 106 435 A1**
(43) Date of publication of application: **21.12.2022**
(21) Application number: 20918360.7
(22) Date of filing: 13.02.2020
(51) Int. Cl.: H04W 72/04

(54) **TERMINAL AND COMMUNICATION METHOD**

(71) Applicant: NTT DOCOMO, INC., Chiyoda-Ku Tokyo 100-6150 (JP)
(72) Inventor: KAKISHIMA, Yuichi, Tokyo 100-6150 (JP); HARADA, Hiroki, Tokyo 100-6150 (JP)
(74) Representative: Hoffmann Eitle
(86) International application number: PCT/JP2020/005660
(87) International publication number: WO 2021/161477

(57) **Abstract**

A terminal includes: a reception unit configured to receive information indicating overhead due to a reference signal of a first RAT (Radio Access Technology); and a control unit configured to determine a transport block size of a data signal of a second RAT based on the information indicating the overhead. The reception unit receives the data signal based on the determined transport block size.

## Description

### [FIELD OF THE INVENTION]

The present invention relates to a terminal and a communication method in a wireless communication system.

### [BACKGROUND OF THE INVENTION]

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

Dynamic spectrum sharing (DSS) for enabling LTE and NR to coexist in the same band has been discussed (for example, Non-Patent Document 2). Coexistence of different RATs (Radio Access Technology) in a single carrier allows flexibility in meeting the traffic demand during the system generation switching period.

### [Citation List]

### [Non-Patent Document]

[Non-Patent Document 1] 3GPP TS 38.300 V15.8.0 (2019-12)
[Non-Patent Document 2] 3GPP TSG RAN Meeting #86 RP-192678 (2019-12)

### SUMMARY OF THE INVENTION

### [TECHNICAL PROBLEM]

According to the current DSS technical specifications, reference signals are respectively transmitted to LTE terminals and NR terminals. As a result, depending on the frame configuration, it is assumed that the overhead of the entire system due to the reference signals varies greatly in the time domain.

The present invention has been made in view of the foregoing, and the code rate can be determined taking into account the overhead due to the reference signals in a wireless communication system when multiple RATs (Radio Access Technology) are enabled to coexist in a single carrier.

### [SOLUTION TO PROBLEM]

According to the disclosed technique, provided is a terminal including a reception unit configured to receive information indicating overhead due to a reference signal of a first RAT (Radio Access Technology); and a control unit configured to determine a transport block size of a data signal of a second RAT based on the information indicating the overhead. The reception unit receives the data signal based on the determined transport block size.

### [ADVANTAGEOUS EFFECTS OF INVENTION]

According to the disclosed technique, the code rate can be determined taking into account the overhead due to the reference signals in a wireless communication system when multiple RATs (Radio Access Technology) are enabled to coexist in a single carrier.

### BRIEF DESCRIPTION OF THE DRAWINGS

Fig. 1 is a drawing illustrating a configuration example of a wireless communication system according to an embodiment of the present invention.
Fig. 2 is a drawing illustrating a downlink channel arrangement example according to DSS.
Fig. 3 is a drawing illustrating an uplink channel arrangement example according to DSS.
Fig. 4 is an example (1) of frequency allocations in DSS.
Fig. 5 is an example (2) of frequency allocations in DSS.
Fig. 6 is a drawing illustrating an LTE downlink channel arrangement example.
Fig. 7 is a drawing illustrating an NR downlink channel arrangement example.
Fig. 8 is a drawing illustrating an LTE and NR downlink channel arrangement example according to DSS.
Fig. 9 is a drawing illustrating an MBSFN subframe.
Fig. 10 is a sequence diagram illustrating an example of transmission and reception of a transport block in an embodiment of the present invention.
Fig. 11 is an example of an overhead indication in an embodiment of the present invention.
Fig. 12 is a carrier arrangement example (1) in an embodiment of the present invention.
Fig. 13 is a carrier arrangement example (2) in an embodiment of the present invention.
Fig. 14 is a drawing illustrating an example of a functional structure of a base station 10 according to an embodiment of the present invention.
Fig. 15 is a drawing illustrating an example of a functional structure of a terminal 20 according to an embodiment of the present invention.
Fig. 16 is a drawing illustrating examples of hardware structures of a base station 10 or terminal 20 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

Furthermore, in an embodiment of the present invention, the duplex method may be TDD (Time Division Duplex), FDD (Frequency Division Duplex), or other methods (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

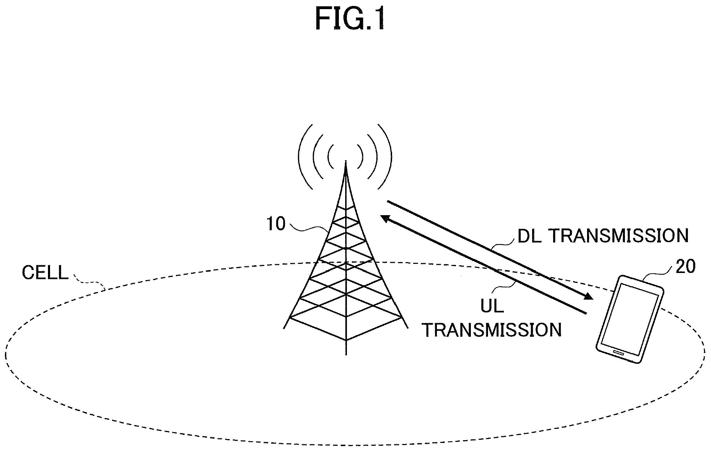

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication apparatus that provides one or more cells and performs wireless communications with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (Scell: Secondary Cell) and a primary cell (PCell: Primary Cell) using CA (Carrier Aggregation). In addition, the terminal 20 may perform communications via a primary cell of the base station 10 and a primary secondary cell (PSCell: Primary Secondary Cell) of another base station 10 using DC (Dual Connectivity).

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

Hereinafter, an example of a DSS (Dynamic Spectrum Sharing) technology that allows LTE and NR to coexist in the same band will be described. According to the DSS technology, coexistence of different RATs (Radio Access Technology) in a single carrier allows flexibility in meeting the traffic demand during the system generation switching period.

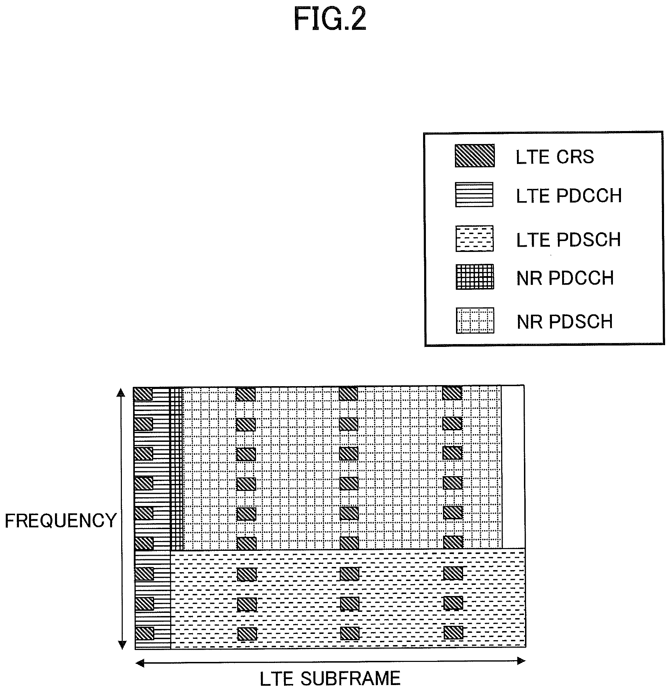

Fig. 2 is a drawing illustrating a downlink channel arrangement example according to DSS. The time domain illustrated in Fig. 2 corresponds to one (1) subframe of LTE. As shown in Fig. 2, in the downlink, "LTE-CRS (Cell specific reference signal)", "LTE-PDCCH", and "LTE-PDSCH" are transmitted as LTE signals or channels. Further, as shown in Fig. 2, in the downlink, "NR-PDCCH" and "NR-PDSCH" are transmitted as NR channels. For example, although not shown in the figure, "NR-PDSCH" may include resources in which DM-RS (Demodulation reference signal) is arranged. For example, as shown in Fig. 2, "LTE-CRS" may be arranged adjacent to "NR-PDSCH".

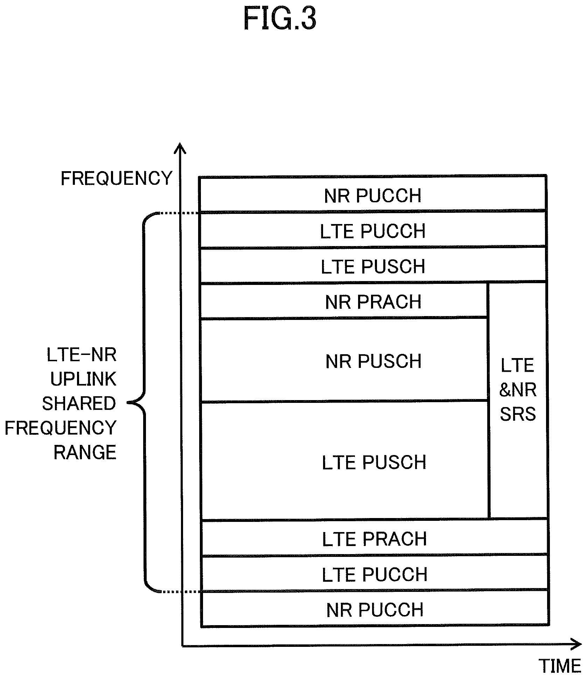

Fig. 3 is a drawing illustrating an uplink channel arrangement example according to DSS. As shown in Fig. 3, uplink channels or signals of the LTE and NR are arranged in a shared frequency band. As shown in Fig. 3, for example, "NR-PUCCH", "LTE-PUCCH", "LTE-PRACH", "LTE-PUSCH", "NR-PUSCH", "NR-PRACH", "LTE-PUSCH", "LTE-PUCCH", and "NR-PUCCH" are arranged in the order of frequency from low to high. In addition, "LTE-SRS (Sounding Reference Signal)" or "NR-SRS" may be arranged in the frequency domain in which "LTE-PUSCH", "NR-PUSCH" and "NR-PRACH" are arranged.

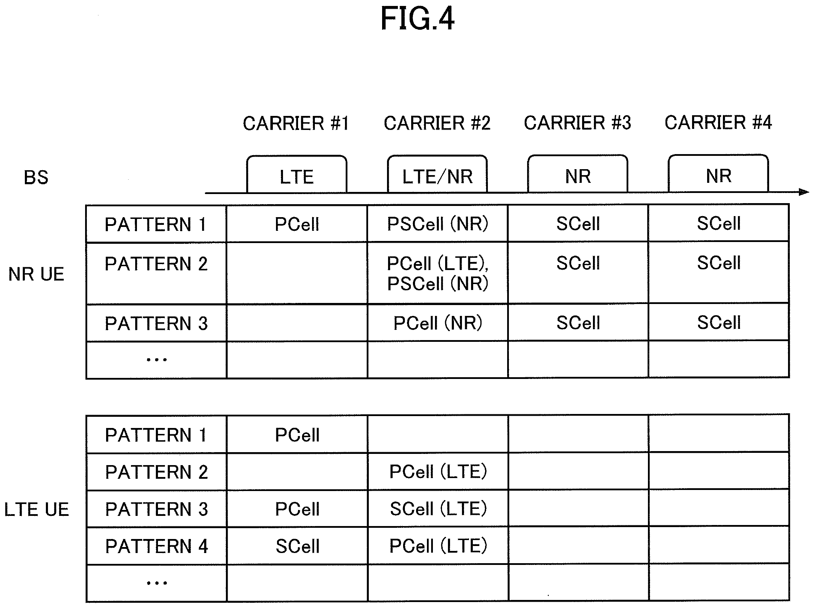

Fig. 4 is an example (1) of frequency allocations in DSS. As shown in Fig. 4, it is assumed that a BS (Base station) provides LTE in carrier #1, LTE and NR in carrier #2, NR in carrier #3, and NR in carrier #4.

For example, for an NR UE (User Equipment), as shown in pattern 1 in Fig. 4, an LTE PCell (Primary Cell) may be arranged in carrier #1, an NR PSCell (Primary Secondary Cell) may be arranged in carrier #2, an SCell (Secondary Cell) may be arranged in carrier #3, and an SCell may be arranged in carrier #4. Further, for example, for an NR UE, as shown in pattern 2 in Fig. 4, an LTE PCell and an NR PSCell may be arranged in carrier #2, an SCell may be arranged in carrier #3, and an SCell may be arranged in carrier #4. Further, for example, for an NR UE, as shown in pattern 3 in Fig. 4, an NR PCell may be arranged in carrier #2, an SCell may be arranged in carrier #3, and an SCell may be arranged in carrier #4.

For example, for an LTE UE, as shown in pattern 1 in Fig. 4, an LTE PCell may be arranged in carrier #1. Further, for example, for an LTE UE, as shown in pattern 2 in Fig. 4, an LTE PCell may be arranged in carrier #2. Further, for example, for an LTE UE, as shown in pattern 3 in Fig. 4, an LTE PCell may be arranged in carrier #1, and an LTE SCell may be arranged in carrier #2. Further, for example, for an LTE UE, as shown in pattern 4 in Fig. 4, an LTE SCell may be arranged in carrier #1, and an LTE PCell may be arranged in carrier #2.

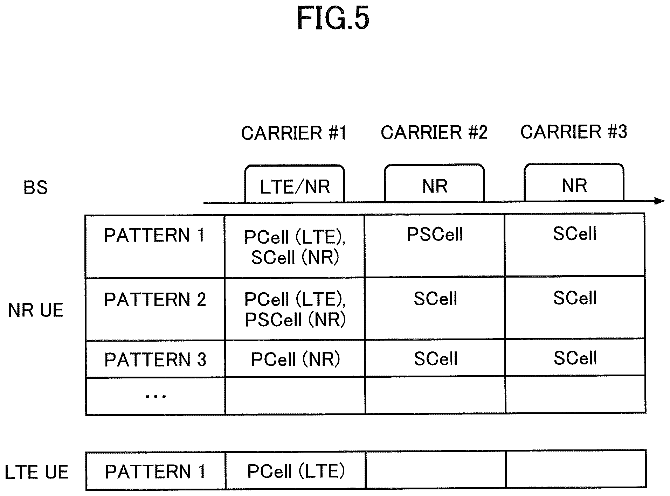

Fig. 5 is an example (2) of frequency allocations in DSS. As shown in Fig. 5, it is assumed that a BS provides LTE and NR in carrier #1, NR in carrier #2, and NR in carrier #3.

For example, for an NR UE, as shown in pattern 1 in Fig. 5, an LTE PCell and an NR SCell may be arranged in carrier #1, an NR PSCell may be arranged in carrier #2, and an NR SCell may be arranged in carrier #3. Further, for example, for an NR UE, as shown in pattern 2 in Fig. 5, an LTE PCell and an NR PSCell may be arranged in carrier #1, an NR PSCell may be arranged in carrier #2, and an NR SCell may be arranged in carrier #3. Further, for example, for an NR UE, as shown in pattern 3 in Fig. 5, an NR PCell may be arranged in carrier #1, an NR PSCell may be arranged in carrier #2, and an NR SCell may be arranged in carrier #3.

For example, for an LTE UE, as shown in pattern 1 in Fig. 5, an LTE PCell may be arranged in carrier #1.

Table 1 is an example illustrating synchronization signals and reference signals of LTE and NR with respect to each purpose.

**[Table 1]**

| Purpose | LTE | NR |
|---|---|---|
| Synchronization (coarse) | LTE PSS/SSS | NR PSS/SSS |
| Synchronization (fine) | CRS | NR TRS |
| Downlink propagation path estimation | LTE CRS/CSI-RS | NR CSI-RS |
| Uplink propagation path estimation | LTE SRS | NR SRS |
| Phase noise estimation | N/A | NR PT-RS |
| Data decoding | LTE CRS/DM-RS | NR DM-RS |
| Broadcast signal decoding | CRS | NR PBCH DM-RS |

As shown in Table 1, in LTE and NR, corresponding signals are defined for each of the same or similar purposes. The "purpose" may mean "usage" . For coarse synchronization, LTE-PSS/SSS are used in LTE, and NR-PSS/SSS are used in NR. For fine (high accuracy) synchronization, CRS is used in LTE, and NR-TRS is used in NR. NR-TRS may be referred to as NR-CSI (Channel State Information)-RS for tracking. For downlink propagation path estimation, LTE-CRS/CSI-RS are used in LTE, and NR-CSI-RS is used in NR. For uplink propagation path estimation, LTE-SRS is used in LTE, and NR-SRS is used in NR. For phase noise estimation, no signal is configured for this purpose in LTE, and NR-PT (Phase tracking)-RS is used in NR. For data decode, LTE-CRS/DM-RS are used in LTE, and NR-DM-RS is used in NR. For broadcast signal decode, CRS is used in LTE, and NR-PBCH-DM-RS is used in NR.

It is noted that, even if the names are the same, the configurations of physical signal may be different. For example, CSI-RS of LTE and CSI-RS of NR differ in the configuration of the physical signal.

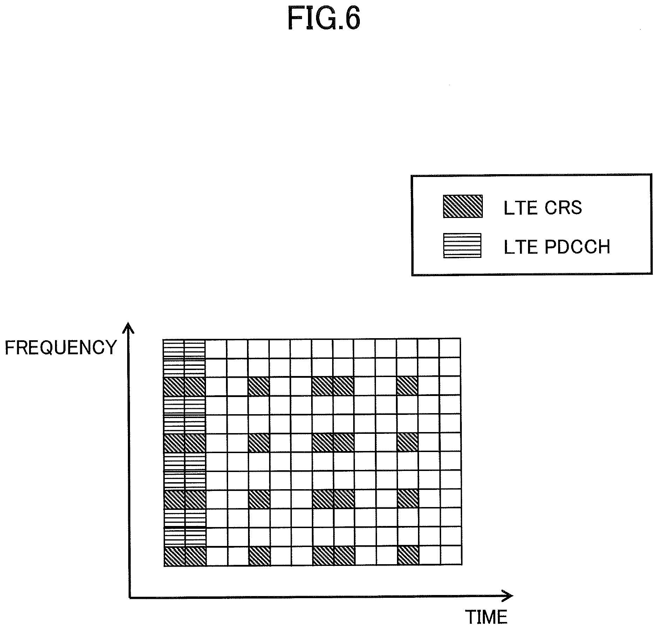

Fig. 6 is a drawing illustrating an LTE downlink channel arrangement example. The time domain shown in Fig. 6 corresponds to one LTE subframe, and the frequency domain corresponds to one resource block. As shown in Fig. 6, LTE-CRS is transmitted as a reference signal and LTE-PDCCH is transmitted as a control signal.

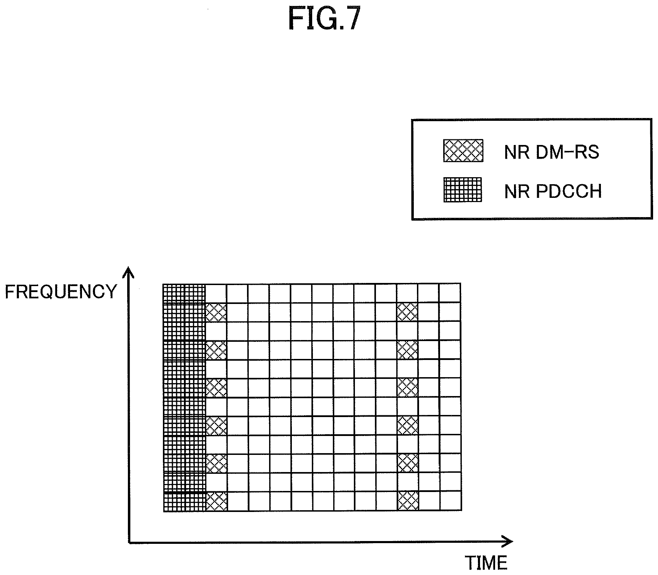

Fig. 7 is a drawing illustrating an NR downlink channel arrangement example. It is assumed that the time domain shown in Fig. 7 corresponds to one NR slot, the frequency domain corresponds to one resource block, and a subcarrier spacing is 15 kHz. As shown in Fig. 7, NR-DM-RS is transmitted as a reference signal and NR-PDCCH is transmitted as a control signal.

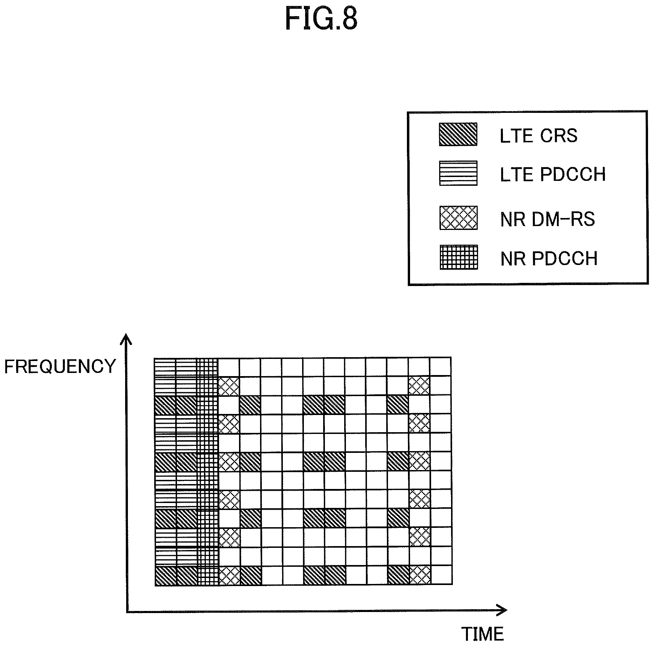

Fig. 8 is a drawing illustrating an LTE and NR downlink channel arrangement example according to DSS. In the current DSS specifications, corresponding signals for the same purpose are respectively transmitted to LTE terminals and NR terminals. As shown in Fig. 8, transmitting LTE and NR signals, respectively, increases the overhead and reduces the resources to transmit data.

Thus, the reduction of overhead is achieved by sharing some signals and/or channels between RATs. For example, the terminal 20 may receive an NR signal using LTE-CRS. In addition, for example, the terminal 20 may use LTE-SS to establish synchronization with an NR cell.

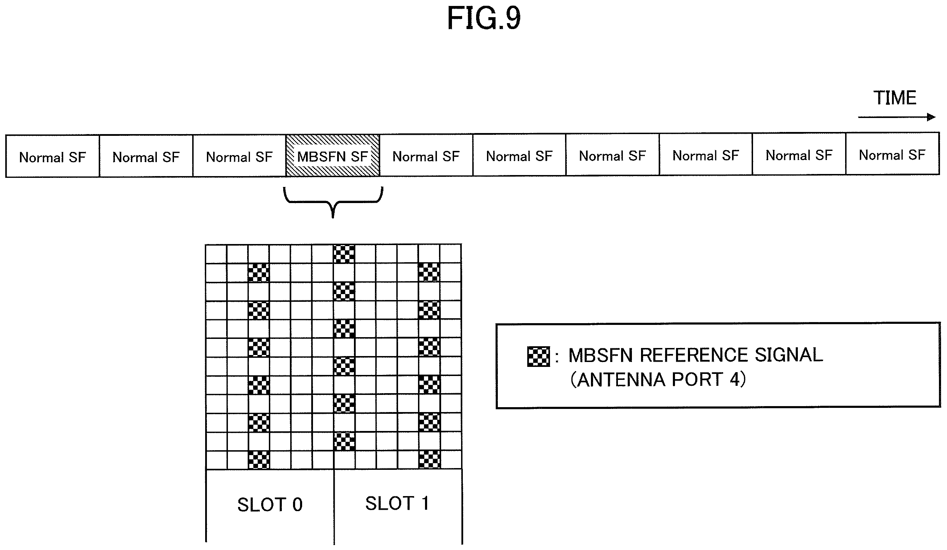

Further, in LTE, it is possible to specify a part of subframes as an MBSFN (Multimedia Broadcast multicast service Single Frequency Network) subframe. Fig. 9 is a drawing illustrating an MBSFN subframe. Regarding the MBSFN subframe, the structure is different from a normal subframe. The first single symbol or the first two symbols are used as a control area of normal subframe. Using other symbols, MBFSN reference signals, transmitted by an antenna port 4, are transmitted at resource element positions as shown in Fig. 9. Regarding the MBFSN reference signals, the MBSFN reference signals are transmitted only when a PMCH (Physical Multicast Channel) is transmitted in the MBFSN subframe. Therefore, the CRS overhead can be reduced by transmitting NR-DM-RS and NR-PDSCH without transmitting the MBSFN reference signals in the MBSFN subframe.

In other words, by applying the MBSFN subframe to the carrier in which DSS is applied, the CRS overhead can be reduced. NR-PDSCH can be decoded by NR-DM-RS and LTE-PDSCH can be decoded by LTE-DM-RS.

Here, the overhead for resources of CRS, or the like, affects the code rate and the transport block size. The NR transmission bit sequence length (indirectly corresponding to the code rate), or TBS, is determined by the procedure 1)-3) below.
1) The terminal 20 determines the number of resource elements N_{RE} in one slot. The length of the frequency domain may be 1 PRB. Here, the parameter xOverhead, indicated from the base station 10 to the terminal 20, does not include DM-RS overhead. For example, N_{RE} is determined based on xOverhead and the DM-RS overhead.
2) The intermediate number of information bits, N_{info}, is obtained by N_{info}=N_{RE}*R*Qₘ*ν, wherein R is a target code rate, Qₘ is a modulation order, and ν is the number of layers.
3) The TBS (Transport block size) is determined based on N_{info}. The quantized TBS is determined according to the value of N_{info}.

The code rate may vary depending on the overhead of DM-RS or other reference signals. The DM-RS overhead is counted per slot. The parameter xOverhead is indicated by RRC signaling as an approximate value of other overhead for CSI-RS, CORESET, etc. For example: the estimated number of resource elements of PRBs used for data transmission may be reduced by 6, 12, or 18, based on xOverhead; or the overhead may be assumed to be zero (0) in a case where xOverhead is not configured.

As described above, in NR, the code rate is determined based on an approximate overhead value. In a case where the approximate overhead value differs significantly from the actual overhead value, it is assumed that the code rate cannot be configured properly and AMC (adaptive modulation and coding) characteristics will be degraded. For example, in a case where an MBSFN subframe is used in DSS, the characteristics may become unstable because the presence or absence of CRS overhead varies greatly from slot to slot.

Therefore, a TBS determination method or a code rate determination method is proposed that is dynamically adapted to varying overhead. The method may be applied to a case in which MBSFN subframes are used in DSS, or may be applied to other cases for the purpose of performing the coding adapted to the overhead.

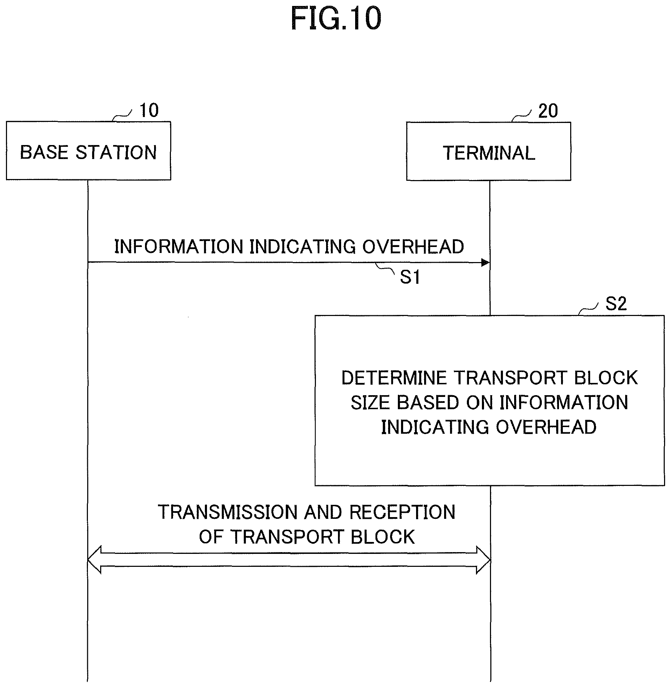

Fig. 10 is a sequence diagram illustrating an example of transmission and reception of a transport block in an embodiment of the present invention. The base station 10 and the terminal 20 may dynamically switch approximate overhead values.

In step S1, the base station 10 may transmit information indicating the overhead to the terminal 20. The information indicating the overhead may be information corresponding to PDSCH or information corresponding to PUSCH. Subsequently, the terminal 20 determines a transport block size based on the information indicating the overhead (S2). Subsequently, the base station 10 and the terminal 20 execute transmission and reception with the determined transport block size (S3).

For example, the information indicating the overhead may, similar to xOverhead, include a part or all of {xOh6, xOh12, xOh18} using the existing overhead indication mechanism, and the amount of overhead may be dynamically switched. It should be noted that xOh6 corresponds to reducing the estimated number of resource elements used for data transmission by 6, xOh12 corresponds to reducing the estimated number of resource elements used for data transmission by 12, and corresponds to reducing the estimated number of resource elements used for data transmission by 18.

For example, the overhead indication may be performed in stages. For example, the narrowing down of overhead candidates and determining the overhead from among the candidates may be performed by a part or all of RRC signaling, MAC-CE, and DCI. Further, the overhead may be indicated per slot or per subframe. For example, per-slot overhead information or per-subframe overhead information may be semistatically indicated to the terminal 20, and the terminal 20 may dynamically switch the estimated overhead based on the information.

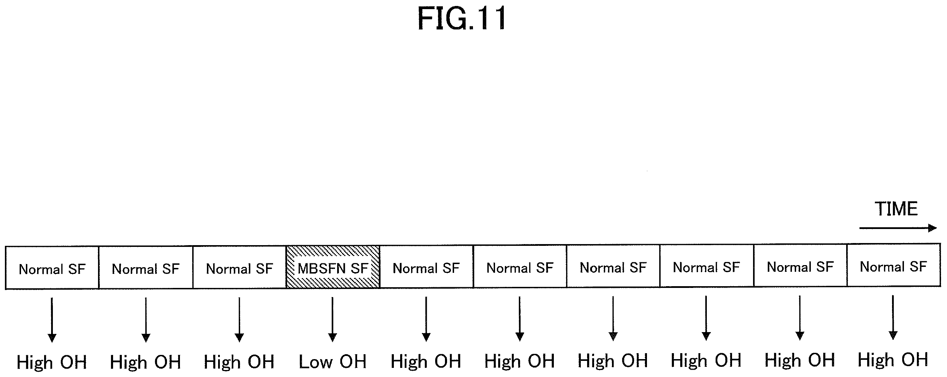

Fig. 11 is an example of an overhead indication in an embodiment of the present invention. The approximate value of the overhead may be indicated to the terminal 20 depending on the MBSFN subframe operation. For example, as shown in Fig. 11, the approximate overhead value may be switched depending on whether a subframe is configured as an MBSFN subframe. In Fig. 11, "HighOH" indicates that the approximate overhead value is large (high) and "LowOH" indicates that the approximate overhead value is small (low). As shown in Fig. 11, because the fourth subframe from the beginning is an MBSFN subframe, "LowOH" may be indicated to the terminal 20 in the subframe. Further, the indicated information may include an overhead value or an approximate overhead value in the subframe.

Further, the terminal 20 may change the approximate overhead value in accordance with CRS configuration information in the MBSFN subframe. For example, a resource in an MBSFN subframe, in which a PMCH is not arranged and PDSCH may possibly be arranged, may possibly be used for transmitting CRS. Therefore, the approximate overhead value is determined based on the CRS configuration information in the MBSFN subframe.

Further, the terminal 20 may change the approximate overhead value depending on the number of CRS ports. For example, the approximate overhead value may be changed based on the number of CRS ports by assuming the number of CRS ports according to the result of receiving CRS information (e.g., RateMatchPatternLTE-CRS) signaled for rate matching.

When dynamically switching the approximate overhead value, the carrier arrangement may be considered to affect the overhead. For example, the NR bandwidth may not match (may not be equivalent to) the LTE bandwidth.

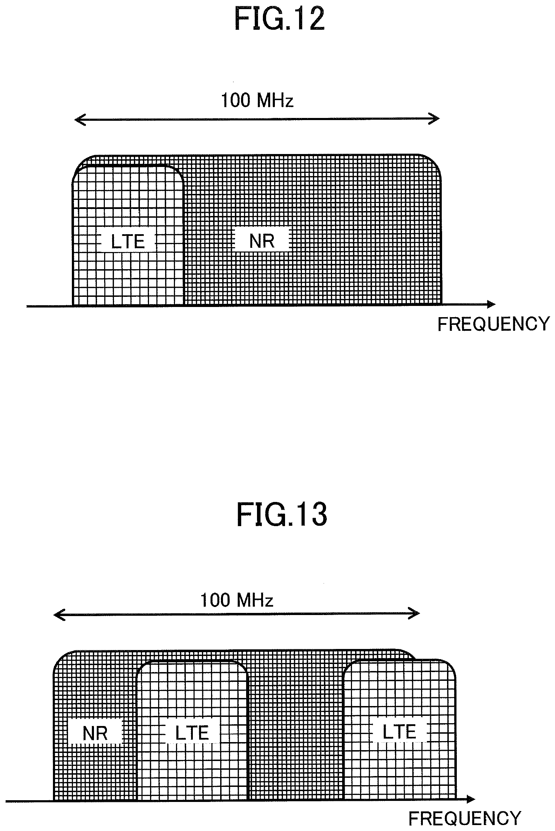

Fig. 12 is a carrier arrangement example (1) in an embodiment of the present invention. For example, as shown in Fig. 12, while the NR carrier is a 100 MHz band, only a part of the carrier (e.g., 20 MHz band) can be the LTE carrier.

Fig. 13 is a carrier arrangement example (2) in an embodiment of the present invention. As shown in Fig. 13, a part of the LTE carrier may not be included in the NR carrier. Further, for example, when the NR carrier is a 100 MHz band, even in a case where the LTE carrier is 20 MHz * 5, there is a possibility of a no inclusion relationship between the NR carrier and the LTE carrier.

In other words, it is assumed that the carriers of the respective RATs (NR and LTE) may be partially overlapped and may not match (may not be equivalent to each other).

Therefore, the base station 10 may indicate, to the terminal 20, an approximate overhead value for each frequency. For example, the base station 10 may indicate, to the terminal 20, an approximate overhead value for each LTE carrier. Further, the base station 10 may indicate, to the terminal 20, the overhead of multiple LTE carriers all together.

Information indicating whether the terminal 20 supports a method of dynamically switching the above-described approximate overhead value may be indicated to the base station 10 from the terminal 20 as a UE capability. Further, information indicating whether the terminal 20 supports a TBS determination method of using dynamically-indicated overhead values may be indicated to the base station 10 from the terminal 20 as a UE capability.

In the above embodiment, the term "approximate overhead value" is used in view of the existing NR technical specifications, but the overhead value may not necessarily be an approximate value. For example, an accurate overhead value may be used. That is, the overhead in a case of MBSFN or in a case of other than MBSFN, may be calculated exactly based on the signaling from the network.

Embodiments of the present invention can be applied regardless of the distinction between uplink, downlink, transmission, or reception. Uplink signals and channels may be replaced with downlink signals and channels, and vice versa. Uplink feedback information may be replaced with downlink control signaling, and vice versa.

Signaling from the base station 10 to the terminal 20 or signaling from the terminal 20 to the base station 10 in the embodiments described above is not limited to explicit methods, but may be indicated in an implicit manner. Further, signaling may not be performed and technical specifications may be uniquely specified.

The signaling from the base station 10 to the terminal 20 or the signaling from the terminal 20 to the base station 10 in the embodiments described above may be signaling of a different layer such as RRC signaling, MAC-CE signaling, or DCI signaling, or may be signaling via broadcast information (MIB (Master Information Block) or SIB (System Information Block)). Further, for example, RRC signaling and DCI signaling may be combined, RRC signaling and MAC-CE signaling may be combined, or RRC signaling, MAC-CE signaling, and DCI signaling may be combined.

In the above-described embodiments, LTE and NR have been described, but the above-described embodiments may be applied to a future communication system (e.g., "6G") beyond NR. For example, the above-described embodiments may be applied to NR and 6G co-existence techniques.

Similarly, in general, a next generation system may receive signals and/or channels of a previous generation system. For example, systems may span multiple generations. For example, a system may apply reference signals of a two generations earlier system. Reference signals of multiple generations may be applied. For example, a system may apply reference signals of a two generations earlier system for synchronization, and may apply reference signals of a previous generation system for data decoding.

While the foregoing describes applying signals and/or channels of a past system to a future system, the reverse is true where signals and/or channels of a future system may be applied to a past system.

The "data" in the above-described embodiments may indicate PDSCH, PDCCH, or PBCH. Further, the "data" may indicate an uplink signal and/or channel.

The embodiments described above can be combined with each other. The features shown in the above-described embodiments can be combined together in various combinations. The combinations are not limited to a particular combination disclosed.

According to the above-described embodiment, the terminal 20 can calculate the transport block size of NR data based on information indicating the overhead due to the LTE reference signals indicated from the base station 10, determine an appropriate code rate, and improve the AMC characteristics.

In other words, the code rate can be determined taking into account the overhead due to the reference signals in a wireless communication system when multiple RATs (Radio Access Technology) are enabled to coexist in a single carrier.

### (Apparatus configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

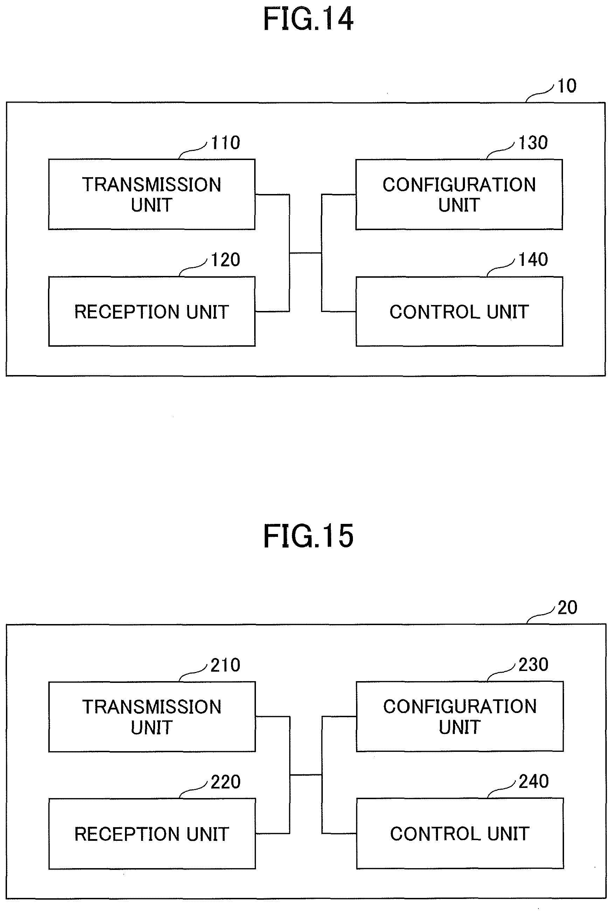

Fig. 14 is a drawing illustrating an example of a functional structure of a base station 10 according to an embodiment of the present invention. As shown in Fig. 14, the base station 10 includes a transmission unit 110, a reception unit 120, a configuration unit 130, and a control unit 140. The functional structure illustrated in Fig. 14 is merely an example. Names of functional divisions and functional units may be any name as long as the divisions or units can perform operations according to an embodiment of the present invention.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the DSS configuration.

The control unit 140 performs control related to the DSS configuration as described in the embodiments. Further, the control unit 140 controls communications using DRX. The functional units related to signal transmission in the control unit 140 may be included in the transmission unit 110, and the functional units related to signal reception in the control unit 140 may be included in the reception unit 120.

### <Terminal 20>

Fig. 15 is a drawing illustrating an example of a functional structure of a terminal 20 according to an embodiment of the present invention. As shown in FIG. 15, the terminal 20 includes a transmission unit 210, a reception unit 220, a configuration unit 230, and a control unit 240. The functional structure illustrated in Fig. 15 is merely an example. Names of functional divisions and functional units may be any name as long as the divisions or units can perform operations according to an embodiment of the present invention.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. Further, the configuration unit 230 stores preset configuration information. Contents of the configuration information are, for example, information related to the DSS configuration.

The control unit 240 performs control related to the DSS configuration as described in the embodiments. Further, the control unit 240 controls communications using DRX. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 14 and Fig. 15), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

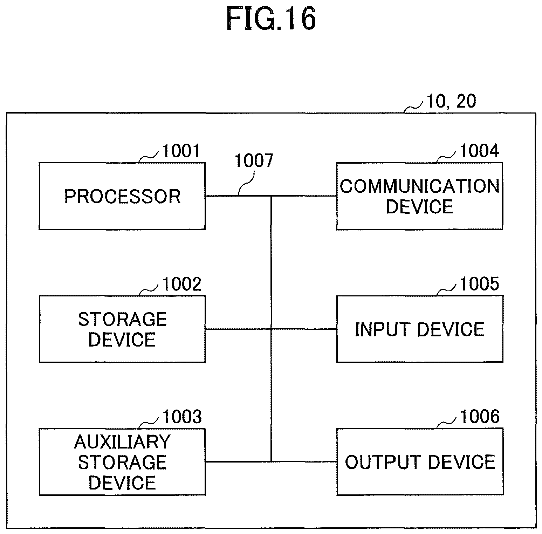

For example, the base station 10, terminal 20, etc., according to an embodiment of the present disclosure may function as a computer for processing the radio communication method of the present disclosure. Fig. 16 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 14 may be realized by control programs that are stored in the storage device 1002 and are executed by the processor 1001. Further, for example, the control unit 240 of the terminal 20 illustrated in Fig. 15 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a micro processor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention according, provided is a terminal including a reception unit configured to receive information indicating overhead due to a reference signal of a first RAT (Radio Access Technology); and a control unit configured to determine a transport block size of a data signal of a second RAT based on the information indicating the overhead. The reception unit receives the data signal based on the determined transport block size.

According to the above-described arrangement, the terminal 20 can calculate the transport block size of NR data based on information indicating the overhead due to the LTE reference signal indicated from the base station 10, determine an appropriate code rate, and improve the AMC characteristics. In other words, the code rate can be determined taking into account the overhead due to the reference signals in a wireless communication system when multiple RATs (Radio Access Technology) are enabled to coexist in a single carrier.

With respect to the second RAT, transmission may be performed via the same carrier as the first RAT. According to the above-described arrangement, when DSS is applied, the terminal 20 can calculate the transport block size of NR data based on information indicating the overhead due to the LTE reference signals indicated from the base station 10, determine an appropriate code rate, and improve the AMC characteristics.

The reception unit may receive the information indicating the overhead per slot or per subframe. According to the above-described arrangement, when DSS is applied, the terminal 20 can calculate the transport block size of NR data based on information indicating the overhead due to the LTE reference signal indicated from the base station 10, determine an appropriate code rate, and improve the AMC characteristics.

The reception unit may receive the information indicating the overhead via at least one of: RRC (Radio Resource Control) signaling; MAC-CE (Media access control-control element); and DCI (Downlink control information). According to the above-described arrangement, when DSS is applied, the terminal 20 can calculate the transport block size of NR data based on information indicating the overhead due to the LTE reference signal indicated from the base station 10, determine an appropriate code rate, and improve the AMC characteristics.

The first RAT may at least configure a subframe to which MBSFN (Multimedia Broadcast multicast service Single Frequency Network) is applied. According to the above-described arrangement, when DSS is applied, the terminal 20 can calculate the transport block size of NR data based on information indicating the overhead due to the LTE reference signals indicated from the base station 10, determine an appropriate code rate, and improve the AMC characteristics.

Further, according to an embodiment of the present invention, provided is a communication method performed by a terminal, the method including: receiving information indicating overhead due to a reference signal of a first RAT (Radio Access Technology); and determining a transport block size of a data signal of a second RAT based on the information indicating the overhead. The receiving includes receiving the data signal based on the determined transport block size.

With respect to the second RAT, transmission may be performed via the same carrier as the first RAT. According to the above-described arrangement, when DSS is applied, the terminal 20 can calculate the transport block size of NR data based on information indicating the overhead due to the LTE reference signals indicated from the base station 10, determine an appropriate code rate, and improve the AMC characteristics.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication (transmission, notification) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, an downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputing", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a subslot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

It is noted that a CRS in the present disclosure is an example of a reference signal.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 1001: Processor
- 1002: Storage device
- 1003: Auxiliary storage device
- 1004: Communication device
- 1005: Input device
- 1006: Output device

## Claims

1. A terminal comprising:
a reception unit configured to receive information indicating overhead due to a reference signal of a first RAT (Radio Access Technology); and
a control unit configured to determine a transport block size of a data signal of a second RAT based on the information indicating the overhead, wherein
the reception unit receives the data signal based on the determined transport block size.

2. The terminal according to claim 1, wherein, with respect to the second RAT, transmission is performed via a same carrier as the first RAT.

3. The terminal according to claim 1, wherein the reception unit receives the information indicating the overhead on a per-slot basis or a per-subframe basis.

4. The terminal according to claim 3, wherein the reception unit receives the information indicating the overhead via at least one of: RRC (Radio Resource Control) signaling; MAC-CE (Media access control-control element); and DCI (Downlink control information).

5. The terminal according to claim 2, wherein the first RAT at least configures a subframe to which MBSFN (Multimedia Broadcast multicast service Single Frequency Network) is applied.

6. A communication method of a terminal, the method comprising:
receiving information indicating overhead due to a reference signal of a first RAT (Radio Access Technology); and
determining a transport block size of a data signal of a second RAT based on the information indicating the overhead, wherein
the receiving includes receiving the data signal based on the determined transport block size.
